# EUROPEAN PATENT APPLICATION

(11) **EP 2 293 537 A1**
(43) Date of publication of application: **09.03.2011**
(21) Application number: 10170946.7
(22) Date of filing: 27.07.2010
(51) Int. Cl.: H04N 1/047

(54) **Imaging system & method**

(30) Priority: 27.07.2009 GB 0912981
(71) Applicant: STMicroelectronics (Research & Development) Limited, Marlow, Buckinghamshire SL7 1YL (GB)
(72) Inventor: Raynor, Jeffrey, Edinburgh Lothian EH12 5HZ (GB)
(74) Representative: McBride, Peter Hill

(57) **Abstract**

An imaging system for a scanner includes a sensor (24) and a rod lens (16). The sensor (24) has a linear array of photosensitive elements arranged in three rows (26a, 26b, 26c) and disposed at an angle such that the rows are at different distances from the lens (16) and the object being scanned. When changes in focus occur, for example in scanning a book or a 3D object, the photosensitive elements giving the sharpest image may be selected. The required angle is preferably achieved by mounting the sensor (24) to a PCB (22) via solder bumps (28) arranged along one side of the sensor (24)

## Description

This invention relates to imaging systems which use a 2-D array of picture elements.

One example of such systems is in flat bed scanners, where it is common to use an image sensor comprising a single row of pixels, typically having a length equal to the width of an A4 page. The page is scanned by relative motion between the pixel row and the object being scanned, typically by moving the pixel row relative to a stationary platen. In this arrangement a simple optical system can be used, typically in the form of a rod lens at a fixed distance between the pixel array and the platen.

Scanners of this type are a useful tool for imaging paper documents as they provide a high resolution, accurate representation of the image, and can be produced at low cost. However, sometimes a non-flat object has to be scanned and the object is not at the optimal image plane; examples of this are copying from a bound book with the page curved near the spine, or a slide in a slide holder. It would be advantageous to scan such objects clearly, which would require a focusing system.

In a system of the type discussed above, it would be possible to adjust the position of the rod lens to obtain good focus. However, this would require an actuator system to move the lens and the cost would not be acceptable in a cost-sensitive consumer appliance. Moreover, the additional mechanical complexity would adversely affect reliability.

Where the scanner is of the type having an optical reduction system, it would be possible to move the optics to ensure the object is in sharp focus. However, optical reduction systems are not popular, especially in consumer applications, as they require a larger scanner in order to allow for the optical path. They are also more expensive and mechanically complex.

There are also various "wavefront coding" systems to extend the depth of field. They require a phase shift mask to be inserted at the aperture point (field stop) and a great deal of digital processing to restore focus. They also introduce artefacts into the image.

There is therefore a need for a scanner sensor without moving parts and able to adapt to non-flat objects, varying object distances, or even misalignments between the sensor and the optics.

Accordingly the invention provides an imaging system for imaging an object placed approximately in an imaging plane, the system comprising a generally linear array of photosensitive elements disposed generally parallel to said imaging plane and extending in a first direction, and a lens system in a fixed relationship to said array;
said array and the lens system being mounted for movement together in a direction perpendicular to said first direction;
and in which said array of photosensitive elements comprises a plurality of parallel rows of photosensitive elements mounted so as to be, in use, at a corresponding plurality of distances from said imaging plane.

This arrangement makes it possible to select between rows at any particular time to provide the optimal one from a range of focus.

Preferably, the ratio of the number of photosensitive elements in each row in said first direction to the number of parallel rows is at least 10:1. This gives an economical compromise between range of focus and total number of photosensitive elements.

Typically, there are three rows of photosensitive elements. Two rows are possible, but will give little choice of focus. Four or more would give greater discrimination but increase device cost and size.

The imaging system will typically include means for determining which one of the rows of photosensitive elements provides the best focus of an object being imaged. Said means may be provided by image processing within chips on which the photosensitive elements are formed, or as separate circuits.

The focus determining means may suitably comprise means for evaluating the contrast in output between pixels.

In one preferred embodiment, the photosensitive elements are provided on a photosensitive surface of one or more integrated circuits mounted on one or more printed circuit boards, and the or each integrated circuit is mounted on its respective circuit board at an angle.

The or each integrated circuit is preferably mounted at said angle by means of solder bumps formed adjacent one longitudinal edge of the integrated circuit.

The lens system may comprise a rod lens extending parallel to said array of photosensitive elements.

The present invention also provides a scanner including an imaging system as defined above.

From another aspect, the invention provides a method of forming an mage of an object placed approximately in an image plane, the method comprising
providing a generally linear array of photosensitive elements disposed generally parallel to said imaging plane and extending in a first direction, said array comprising a plurality of parallel rows of photosensitive elements,
arranging said array relative to the imaging plane such that said rows are at a corresponding plurality of distances from the imaging plane, and
effecting relative movement between said array and the imaging plane in a second direction perpendicular to the first direction while focusing light from the imaging plane onto the array through a lens system.

The method may further comprise examining the output of the photosensitive elements to determine which provides a better focus

An embodiment of the invention will now be described, by way of example only, with reference to the drawings, in which:
Fig. 1 is a schematic side view of an imaging system forming one embodiment of the invention;
Fig. 2 shows part of Fig. 1 in greater detail; and
Fig. 3 is an underneath plan view corresponding to Fig. 2.

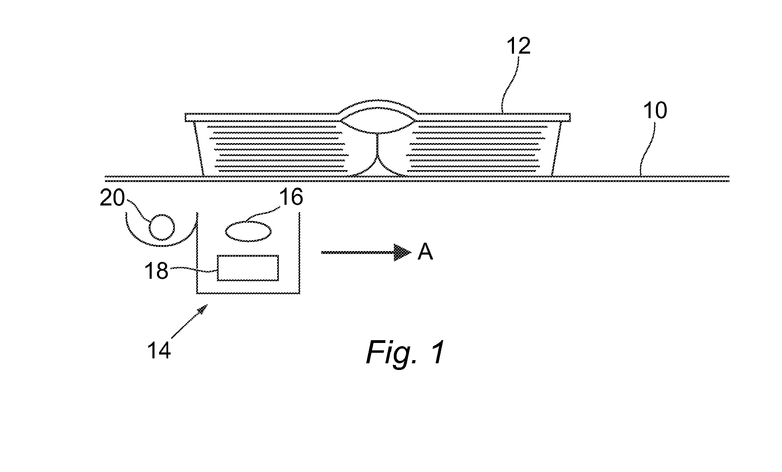

Referring to Fig. 1, a scanner includes a transparent platen 10 on which an object 12 such as a book may be placed. The scanner includes an imaging system generally designated at 14 which extends across the width of the platen 10 and can be traversed along the length of the platen 10 in the direction A. The imaging system 14 comprises a lens 16 and a photosensitive array 18. Illumination means are provided to illuminate the object 12, for example in the form of a tubular cold cathode lamp 20 moving with the imaging system 14.

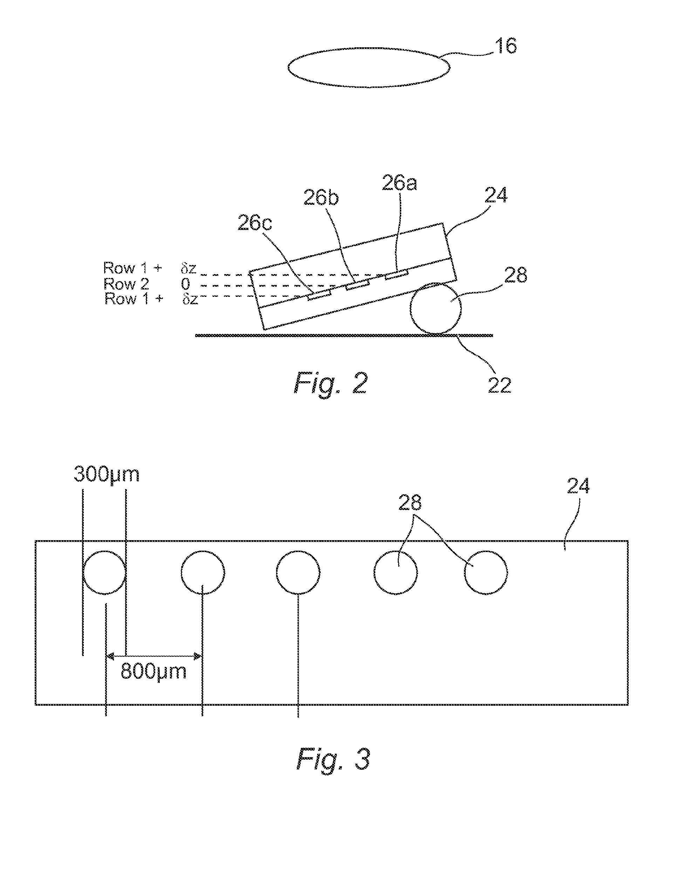

Referring to Figs. 2 and 3, the photosensitive array 18 comprises a printed circuit board 22 on which a sensor 24 is mounted. The sensor 24 comprises an integrated circuit (or in practice a row of integrated circuits) spanning across the imaging system. In the prior art, a single row of photosensitive elements would be formed. In the present invention, there is provided a plurality of rows, in this embodiment three rows 26a, 26b, and 26c.

Additionally, the sensor 24 is mounted at a slight angle to the plane parallel to the platen 10, with the result that the rows 26a, 26b and 26 c are at different distances from the lens 16. A suitable range of angles is between 2° and 8°. For a pixel pitch of 50 µm, for example, this would give a difference in distance between rows of 10 µm to 40 µm.

In the embodiment shown, the angled mounting of the sensor is achieved by mounting the sensor 24 at an angle to the PCB 22 by means of "through silicon via" (also referred to as chip scale packaging or wafer scale packaging) solder bumps 28 along one side of the array. Alternatively, the sensor 24 could be mounted conventionally on the PCB 22, and the PCB 22 mounted at an angle on its supporting structure. The use of solder bumps as shown is preferred; this technique is not only well suited to mass production, but reflow of the solder bumps produces a self-aligning effect of the chip on the PCB because of surface tension effects, and thus assists in producing an accurate linear array from a number of separate chips.

During operation, the photosensors which produce the sharpest image are identified and their output used. This can be done, for example, by examining horizontally neighbouring pixels for greater contrast. Methods of establishing maximum contrast are well know in for example autofocus systems, typically by detecting the sharpest transition between light and dark, or the highest spatial frequency content.

The sensor 24 may be of any suitable form. Most suitably, the sensor 24 will be a CMOS integrated circuit with active pixels and include the image processing circuitry required to select the pixels to be used and output the image data in an appropriate form.

The invention thus provides a simple, all electronic focusing system and method suitable for use in low cost mass produced scanners.

## Claims

1. An imaging system for imaging an object placed approximately in an imaging plane, the system comprising a generally linear array of photosensitive elements disposed generally parallel to said imaging plane and extending in a first direction, and a lens system in a fixed relationship to said array;
said array and the lens system being mounted for movement together in a direction perpendicular to said first direction;
and in which said array of photosensitive elements comprises a plurality of parallel rows of photosensitive elements mounted so as to be, in use, at a corresponding plurality of distances from said imaging plane.

2. An imaging system according to claim 1, in which the ratio of the number of photosensitive elements in each row in said first direction to the number of parallel rows is at least 10:1.

3. An imaging system according to claim 1 or claim 2, in which there are three rows of photosensitive elements.

4. An imaging system according to any preceding claim, including means for determining which one of the rows of photosensitive elements provides the best focus of an object being imaged.

5. An imaging system according to claim 4, in which the focus determining means comprises means for evaluating the contrast in output between pixels.

6. An imaging system according to any preceding claim, in which the photosensitive elements are provided on a photosensitive surface of one or more integrated circuits mounted on one or more printed circuit boards, and the or each integrated circuit is mounted on its respective circuit board at an angle.

7. An imaging system according to claim 6, in which the or each integrated circuit is mounted at said angle by means of solder bumps formed adjacent one longitudinal edge of the integrated circuit.

8. An imaging system according to any preceding claim, in which the lens system comprises a rod lens extending parallel to said array of photosensitive elements.

9. A scanner including an imaging system in accordance with any preceding claim.

10. A method of forming an mage of an object placed approximately in an image plane, the method comprising
providing a generally linear array of photosensitive elements disposed generally parallel to said imaging plane and extending in a first direction, said array comprising a plurality of parallel rows of photosensitive elements,
arranging said array relative to the imaging plane such that said rows are at a corresponding plurality of distances from the imaging plane, and
effecting relative movement between said array and the imaging plane in a second direction perpendicular to the first direction while focusing light from the imaging plane onto the array through a lens system.

11. The method of claim 10, further comprising examining the output of the photosensitive elements to determine which provides a better focus
